(19) Europäisches Patentamt
European Patent Office
Office européen des brevets

(11) **EP 3 751 252 A1**

(12) **EUROPEAN PATENT APPLICATION**

(43) Date of publication:
**16.12.2020 Bulletin 2020/51**

(51) Int Cl.:
**G01N 15/02** (2006.01)      **G01N 21/3563** (2014.01)
**G01N 21/3581** (2014.01)      **G01N 21/3577** (2014.01)
**G01N 21/47** (2006.01)

(21) Application number: **19020315.8**

(22) Date of filing: **26.04.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aquantis SA**
**1015 Lausanne (CH)**

(72) Inventors:
- **Pandey, Gokarna**
  **1200 Brussels (BE)**
- **Zhang, Yuchen**
  **3640 Molenbeersel (BE)**
- **Vandermeiren, Werner**
  **1930 Zaventem (BE)**
- **Van Eeghem, Vincent**
  **1004 Lausanne (CH)**

(54) **PARTICLE SIZE AND CONCENTRATION MEASURING SENSOR FOR INLINE INDUSTRIAL PROCESS MONITORING**

(57)      This invention concerns a sensor system and a method to extract the average size and concentration of the particles in liquid media (e.g. suspended in liquids). The sensor consists of an electronic unit for the generation and detection of electromagnetic wave, and a specially designed sensor head to transmit and receive the electromagnetic waves. The transmitted signal is further processed via a newly-developed signal processing model to extract the average particle size and concentration. This sensing system uses a single or multiple frequency between 0.1 GHz -1 THz.

Figure 1

**Description**

Field of invention

1. The invention relates to the field of particle sizing and concentration measurement. More specifically it relates to apparatus and methods for real-time and inline measuring the size and concentration of particles in liquid media using microwave and millimeter waves.

Background of the invention

2. Particle size determination is essential in various industries such as food, pharma, chemical, etc. The evaluation of the particle size and understanding how it affects the products or processes is essential to ensure high-quality products. Currently, no inline device for controlling the wet milling process exist. Existing particle sizing systems are based on the technologies such as laser diffraction, dynamic light scattering, image analysis, etc. and they are used as lab measurements. These approaches are not compatible with high particle concentrations or opaque suspensions due to their limited penetration depth which is limited to the surface. These limitations typically require sampling and sample preparation (e.g. dilutions). As an example, a 60-minute wet milling procedure is interrupted after 55 minutes to take a sample and to analyze in the lab. Based on the results the wet-mill is restarted for a few minutes until the wanted results. This approach is time consuming, labor intensive and prone to manual errors. This can eventually result in compromised quality or even loss of the entire batch.

3. Therefore, there is a need of the in-line and real-time particle sizer which is not obstructed by concentration or opacity.

4. Currently either low frequency solutions such as ultrasound or high frequency solutions such as laser technology are used for the particle sizing application. The microwave and millimeter wave technologies have never been explored for particle sizing applications. These waves offer a good combination of resolution and penetration depth. These waves offer a higher sensitivity to water in a media. In addition, because of high penetration depth, microwave and mm-waves can be used to characterize the materials that are opaque at optical and infrared frequencies. Therefore, microwave and mm-wave sensor methodologies can provide a potential solution to measure the both particle size and concentration in industrial and lab environments.

Summary of the invention

5. It is an object of embodiments of the present invention to provide sensor systems and methods for determining the particle size and concentration in liquid media in inline, online, at-line and lab environments.

6. It is an advantage of embodiments of the present invention to provide the means to translate amplitude and phase data collected by the sensor into the particle size and concentration in liquid media.

7. The present invention relates to a sensor for measuring the amplitude and phase of the transmission signal of liquid under test, the sensor comprising an electromagnetic radiation input means for creating electromagnetic radiation signal, a sensor head for directing the electromagnetic radiation to liquid under test, a sensor head for receiving the electromagnetic radiation transmitted through the liquid media, a distance between the sensor heads, and a detection means for detecting signal received at the receiving sensor head. It is an advantage of the embodiments according to the present invention that changes in the amplitude and phase of the transmission signal, result in the changes of the size and particle concentration in liquid under test.

8. The electromagnetic radiation input to the emitting sensor head means may be an electromagnetic radiation source operating at least one or multiple frequencies between 0.1 GHz to 1 THz, and the electromagnetic receiving unit to receive the signal from sensor head means may be an electromagnetic receiver operating at the defined frequency of the operation.

9. The present invention relates the combination of the finding the optimal frequency for the liquid under test, use of the sensor heads for the emitting and receiving the electromagnetic waves in different configurations, and development of signal translation model to extract the average particle size and concentrations of particle simultaneously in a liquid media.

10. It is an advantage of embodiments of the present invention to provide optimum frequency for the predetermined liquid media so that the emitted wave can pass through media with minimum distance of 3 mm.

11. It is an advantage of embodiments of the present invention to provide optimum frequency for the typical range of the particle size in predetermined liquid media, whereas the wavelength of the operating frequency may be minimum 10 times bigger than the biggest particles present in the predefined liquid under test.

12. This invention further relates to the different configurations of sensor heads for the effective emission and reception of the electromagnetic waves in liquid under test for the optimized operating frequency, whereas the sensor heads are the means of emitting and receiving the electromagnetic waves. It is an advantage of the embodiments according to the present invention that the sensor heads may be built on any transmission lines topology to emit the electromagnetic radiation to liquid under test (LUT) and receive electromagnetic radiation transmitted through LUT, for example, sensor heads may be included but not limited to reciprocal waveguide ports, reciprocal coaxial cable ports, waveguide ports combined with antennas, reciprocal dielectric filled metal waveguides. Sensor heads dimensions may also be determined by the operating frequency. The senor heads may comprise a protective window shielding at the side of liquid under test. The material used for the protective window may be transparent to the operating frequency.

13. It is an advantage of embodiments according to the present invention that the distance between two sensor heads may be adjustable to be able to adjust the sensor for the accurate extraction of particle size and particle size for the liquid under test.

14. It is an advantage of embodiments according to the present invention that the sensor heads may be included but not limited to immersed in homogeneous liquid under test, built inside the liquid container where liquid under test is following, built exterior or interior if the liquid container e.g. pipe where liquid under test is flowing, immersed in liquid of big tank.

15. It is an advantage of embodiments according to the present invention that the sensor may be the part of industrial processes such as wet grinding, emulsification, homogenization, mixer etc. in such case sensor head provided in an industrial compatible way, i.e. allowing water clearing, being durable in industrial environmental conditions, etc.

16. It is an advantage of embodiments according to the present invention that not only the liquid near the sensor head is measured but a volume between two sensor head is measured for determining the accurate particle size and concentrations of the liquid media. Minimum distance between sensor heads is 3 mm such that the interaction between signal and LUT happens in sufficient volume.

17. The present invention also relates to a method of detecting both particle size and concentration in predetermined liquid products, the method comprising the following steps

18. Emitting electromagnetic waves using above mentioned sensor head towards the predetermined liquid media, the electromagnetic radiation having at least one frequency within a frequency range of 0.1 GHz to 1 THz - detecting electromagnetic radiation transmitted through the liquid under test. Transmitted signal comprises the amplitude and phase.

19. Calculating the average particle sizes and concentration of particles in the predetermined liquid under test based on said received amplitude and phase and taking into a mathematical model or calibration steps. The method furthermore may comprise analyzing the industrial process based on said particle size and particle concentration. Industrial process control parameters can be directly derived based on the recorded amplitude and phase, also defined as look up table.

20. It also an advantage of the current invention that particle size only influences the amplitude of the signal and the particle concentration influences the amplitude and the phase of the transmitted signal.

21. It is an advantage of embodiments of the present invention that only a single transmission measurement may be enough for obtaining particle size and particle concentrations.

22. The present invention also relates to a computer program that connect the receiver, collect the data of electromagnetic radiation with at least one frequency within a frequency range of 0.1 GHz to 1 THz transmitted through liquid under test. The computer program further may be programmed for calculating the particle size and particle concentration based on amplitude and phase of transmission signal, mathematical model and calibration data. The computer program may be adapted for performing, when executed on a computing device, a method according to an embodiment of the present invention. The computer program further may comprise the controlling information for the industrial processes.

23. It is an advantage of embodiments of the present invention that the sensor system can measure through the opaque liquids. It is also an advantage of the present invention compare to the prior art devices that system can measure the very high concentration up to 80 %.

24. The sensor system may be combined with external temperature sensor to measure the predetermined temperature range of liquid under test. Hence, it is an advantage of embodiments according to the present invention that extraction of the particle size and concentration can be determined regardless of the temperature of the liquid under test.

25. It is an advantage of embodiments according to the present invention that a sensor system and method can be obtained whereby a process, e.g. industrial process can be followed by instantaneous detection of the changes in particle size, using only the amplitude of the transmission measurements.

26. It is an advantage of embodiments of the present invention that to determine the particle size and particle concentration in the liquid media that includes but not limited to suspensions, dispersions, and emulsions where particles are suspend, dispersed and emulsified, respectively.

27. It is an advantage of embodiments of the present invention that to determine the particles also includes the fat drop-lets in an emulsion. Particles also include the particle in a dispersions and suspensions media.

28. It is an advantage of embodiments of the present invention that time dependent monitoring of particle size can be used to monitor different stages of a wet milling, homogenization, emulsifications, and dispersion processes. It thus is an advantage of embodiments that all the mentioned process can be monitored, controlled and optimized.

29. It is an advantage of embodiments of the present invention to provide methods and systems for optimizing industrial wet milling, homogenization, emulsifications, dispersion processes in terms of efficiency and product throughput.

30. The present invention furthermore relates to the use of a sensor as described above for monitoring a change in particle sizes in an industrial process.

31. It is an advantage of embodiments of the present invention to provide a lab apparatus for particle size and concentration in lab.

32. Other features and advantages of embodiments of the present invention will become apparent from the explanation of the drawings and detailed descriptions embodiment(s) described hereinafter.

Brief description of drawings

33. Figure 1- illustrates a sensor configuration for measuring the particle size and particle concentrations, according to an embodiment of the present invention. Figure 1 also shows a sensor heads configuration where sensor heads are immersed in LUT.

Figure 2a- illustrates a sensor heads configuration where sensor heads are placed outside the liquid container. This configuration is contact-less.

Figure 2b- illustrates a sensor heads configuration where sensor heads are built in exterior of the LUT container. LUT and sensor head are in contact.

Figure 2c- illustrates a sensor heads configuration where sensor heads are built in exterior of the LUT container. LUT are following in LUT container.

Detailed description of illustrative embodiments

34. The present invention will be described with respect to embodiments and with reference to certain drawings, but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

35. Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

36. Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

37. It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

38. Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the particular features, structures or characteristics may be combined in any suitable manner, as would be apparent to one of ordinary skill in the art from this disclosure, in one or more embodiments.

39. Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

40. Furthermore, while some embodiments described herein include some, but not other features included in other embodiments, combinations of features of different embodiments are meant to be within the scope of the invention, and form different embodiments, as would be understood by those in the art. For example, in the following claims, any of the claimed embodiments can be used in any combination.

41. In the description provided herein, numerous specific details are set forth. However, it is understood that embodiments of the invention may be practiced without these specific details. In other instances, well-known methods, structures and techniques have not been shown in detail in order not to obscure an understanding of this description.

42. Where in the embodiments of the present invention reference is made to liquid under test or LUT, reference is made to the liquid of interest that is to be identified based on the particle size and particle concentration or that is to be monitored for identifying particle size and particle concentration during a process, e.g. an industrial process. LUT refers to the liquid of interest by which distribution of the particles is homogeneous. Where in the embodiments of the present invention reference is made to liquid media, reference is made to the liquid where particles may be included but not limited to suspended, dispersed, emulsified, and mixed.

43. The present invention describes sensor devices and measurement methods for measuring or monitoring, qualitatively or quantitatively, the particle size and particle concentration in liquid media. Determining the particle size and particle concentration may therefore allow to control and monitor the different industrial processes such as wet milling/grinding, homogenization, emulsifications, and dispersion, mixing, dogging. It thus is an advantage of embodiments that all the mentioned process can be and optimized. Currently there is no inline device for controlling those industrial process. Prior art techniques typically require sampling and sample preparation (e.g. dilutions) which are time consuming and labor intensive.

44. The particle size and concentration for various products can be determined, independently of their shape. It is also an advantage of the present invention compare to the prior art devices that because of the high penetration depth, concentration of the particle in the liquid under test is not an issue, system can measure the very high concentration up to 80 %. No dilution is required which is the biggest advantages of the current invention.

45. According to embodiments of the present invention, there are three parts in the system, electronics platform, sensor heads, and computer program unit. Electronic platform is used for generating and receiving the electromagnetic radiation signal and sensor heads are used for the electromagnetic signal propagation inside the LUT. Computer program unit is used for the communicating the different hardware, collecting the data, and translate the data into particle size and particle concentration. Communicating with the different hardware and collecting the data may be part or may not be part of the sensor. The liquid container may be containing the liquid under test in between two sensor heads. The liquid container may be part or may not be part of the sensor.

46. Electronics platform consist of an electromagnetic radiation means for creating an electromagnetic radiation signal and Electromagnetic receiver for receiving an electromagnetic signal. The electronic platform may be part or may not be part of the sensor. The radiation source may be a conventional radiation source emitting electromagnetic radiation at the operating frequency of the sensor. The radiation source may for example be an oscillator such as for example backward wave oscillators, IMPATT diodes, Gunn diodes, etc., it may for example be a non-linear frequency converters or Multipliers such as harmonic mixers, balanced mixers, etc., it may be for example a phase locked synthesizer, a voltage-controlled oscillator or a nonlinear optical mixer (optics to THz). The sensor furthermore comprises an electromagnetic radiation detection (receiving) means for detecting radiation transmitted through the LUT, after passing through the receiving sensor head. The receiver may for example be vector receiver combining the mixture with local oscillator. Electronics platform may simply be the Vector Network Analyzer (VNA) with both Electromagnetic source and receiver in a device. The operating frequency wherein the transmission is measured may depend on the absorption of the LUT and estimation of range of the particle sizes, which is discussed here under. The frequency range may be in a microwave frequency range, e.g. between 0.1 to 10 GHz, which can for example be used for bigger particle size, may be in the millimeter wave range, e.g. between 10 GHz to 100 GHz for detecting the medium size particle, or may be in the sub Terahertz range, e.g. between 100 GHz to 1 THz for detecting the smaller particles.

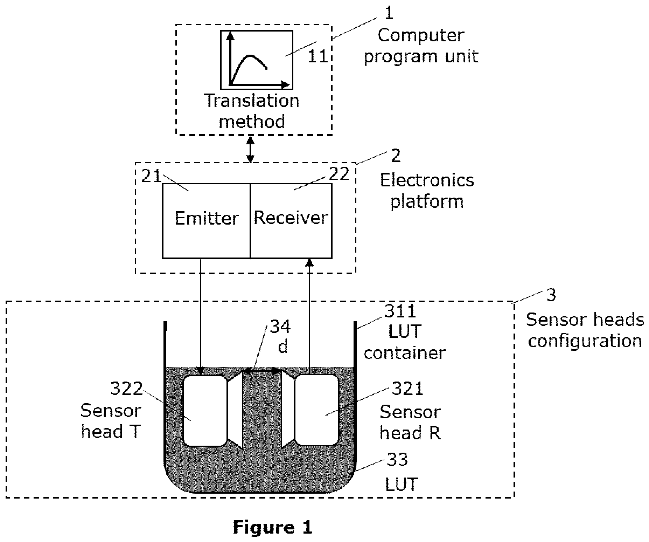

47. By way of illustration, an example of the configuration of a sensor according to an embodiment of the present invention is shown in Figure 1. An electronics platform numbered 2 which consist of electromagnetic radiation source/emitter numbered 21 and receiver numbered 22 are shown. The computer program numbered 1 which consist of the different sub-programs is also shown. The main part of the computer program is translation method numbered 11 is also depicted in this figure. The sensor heads may be configured in different option. Figure 1 also illustrate a sensor heads configuration where both sensor heads Sensor head T numbered 322 and Sensor head R numbered 311 are immersed in LUT numbered 33. The LUT is contained in a LUT container numbered 311. LUT container may or may not be the part of the sensor system. The distance between two sensor heads d numbered 34 is also depicted in the figure.

48. According to embodiments of the present invention, three aspects are combined: frequency optimization for the predetermined LUT, sensor head design and particle size and particle concentration extraction mathematical model.

49. The sensor system and mathematical extraction model according to embodiments of the present invention measures and analyzes the transmission signal through LUT, respectively. Particle size and particle concentrations are the two unknowns in the LUT and they determine the interaction between the EM wave and the particles. Size of the Particle and their amount determine the transmitted signal through LUT and offer the possibility of extracting them. The transmission signal contains the amplitude and phase. These two parameters depend on the material's dielectric property.

$$\varepsilon = \varepsilon_r - \varepsilon_i \qquad\qquad (1)$$

50. with $\varepsilon$ as the dielectric permittivity, $\varepsilon_r$ as the real part of the dielectric permittivity, and $\varepsilon_i$ as the imaginary part of the dielectric permittivity.

51. Dielectric permittivity of a material is a frequency-dependent parameter. Reason for the frequency dependence is the different dielectric polarizations which take place at different spectral frequency bands. Dielectric permittivity of LUT determines the phase and amplitude by which the phase is determined by $\varepsilon_r$ which is related to the speed of the propagation inside the liquid. Part of the amplitude is determined by the $\varepsilon_i$ which is related to the absorption, and part of amplitude is determined by the diffraction by particles. $\varepsilon$ is frequency dependent and hence diffraction, absorption and speed of the propagation through LUT is frequency dependent. Therefore, for the most accurate extraction of particle size and particle concentration in LUT, it is essential to assess the most appropriate frequency. Therefore, at least one frequency of the microwave and millimeter wave ranges are used in this invention. Furthermore, in terms of the sensitivity and resolution of the sensor for the determination of the particle size, choice of the frequency is also crucial. The choice of the frequency also determines the sensor head mechanical specification. Frequency is chosen based on the two parameters: absorption of the liquid media and biggest particle size present in predetermined LUT.

52. Particles can be suspended, dispersed, emulsified, and mixed in liquid media which can absorb the applied electromagnetic radiation. Combination of the particles and liquid media is referred as the LUT. When the particles are suspended, dispersed, emulsified, and mixed in a liquid media, the absorption decreases. Frequency is chosen so that the penetration depth is minimum 3 mm in liquid media. The frequency is chosen low enough to maintain the penetration depth above 3 mm.

53. It is an advantage of embodiments according to the present invention that the collective diffraction from the particles is measured between two sensor heads. The signal diffraction phenomenon takes place when the signal incident on the particles. The signal diffraction phenomenon due to particle size depends on the wavelength of applied frequency. For the same wavelength of applied frequency bigger particles gives higher diffraction (result in low amplitude) compared to the small particles. The bigger the particle size, a bigger portion of the signal will be diffracted. In another hand, for the same size of the particle, frequency with longer wavelength will have less diffraction compared to the frequency with shorter wavelength. If the particle size is in the range of the wave length of the applied signal, diffraction depends on the orientation of the particle size. Orientation of the particle is very difficult to control in liquid media. Hence, frequency is chosen such that the wavelength is at least 20 times bigger than the biggest particle in the liquid media.

54. Because of the properties of microwave and millimeter wave frequency waves, it is an advantage of embodiments of the present invention that the sensor system can measure through the opaque liquids. Among the range of 0.1 GHz to 1 THz, frequency is chosen such that there is enough penetration in the LUT. In general, lower the frequency, higher the penetration depth. However, lowering the frequency may reduce the sensitivity and resolution for the particle size determination. Therefore, selection of the correct frequency for the LUT is essential to obtain optimal sensitivity and resolution

55. The sensor system presented on this invention can measure very high particle concentrations in liquid media. The higher the concentration, the better the resolution and accuracy. The liquid media, for example water, absorbs the more than the particles. Adding the more particles result in the higher penetration depth in the LUT.

56. According to embodiments of the present invention, sensor heads are used for the effective emitting and receiving the electromagnetic waves for the optimized operating frequency. The sensor heads are the means of emitting and receiving the electromagnetic waves. Sensor heads may be any transmission lines to emit the electromagnetic radiation to LUT and receive electromagnetic radiation transmitted through LUT. Example of sensor heads may be included but not limited to reciprocal waveguide ports, coaxial cable, waveguide ports combined with antennas, dielectric filled reciprocal metal waveguides, microstrips, coplanar waveguides, and etc. One example of sensor heads may be designed using reciprocal waveguide ports and their dimension is determined by the optimized operating frequency. Sensor heads may be designed in rectangular or circular waveguide, sensor heads may out-tapered from the standard waveguide for the operating frequency. Out-tapered wave guide can increase the focusing of electromagnetic waves and reduce the loss. Length of sensor heads from standard waveguide port to its exterior is minimum 5 mm and maximum length may not limit by the technology. The sensor heads may be fabricated in metal or dielectric filled metal waveguides. The senor heads may comprise a protective window shielding at the side of liquid under test. The material used for the protective window may be transparent to the microwave and millimeter wave, in particular transparent to the operating frequency. The typical transparent materials include glass, plastic and polytetrafluoroethylene (e.g. Teflon), etc.

57. It is an advantage of embodiments according to the present invention that the sensor heads can be provided in an industrial compatible way, i.e. allowing for example water clearing, industrial environmental conditions, etc. Once the frequency is selected, the main dimensions of the sensor heads are determined and can be fabricated according the physical requirement LUT measurements.

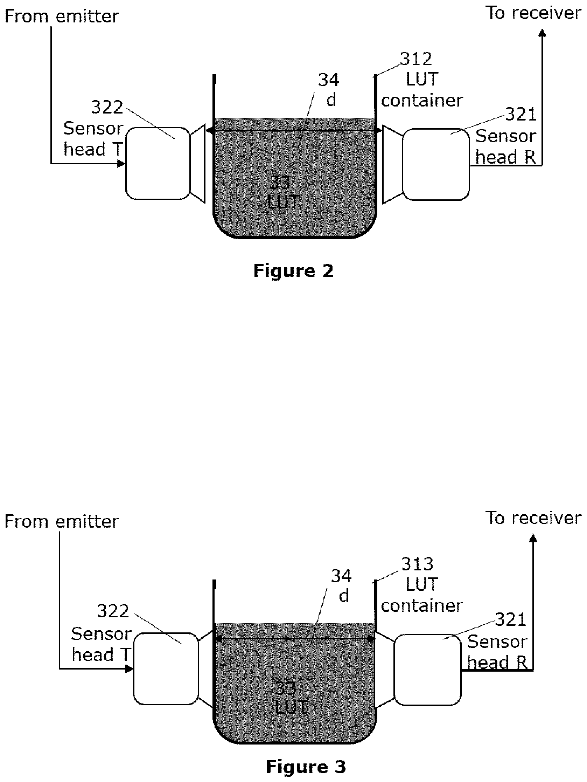

58. It is an advantage of embodiments according to the present invention that the distance between two sensor heads can be adjusted to full fill the requirement of the industrial process. As determined by the penetration depth of operating frequency, minimum 3 mm distance is kept between two sensor heads. This gives the enough volume to interact with applied EM wave. Sensor heads may be built but not limited to immersed in homogeneous liquid under test, built inside the pipe where liquid under test is following, built exterior of the pipe where liquid under test is following inside the pipe, may be immersed in liquid of big tank. By way of illustration, different configurations of a sensor heads according to an embodiment of the present invention are shown in Figure 1, Figure 2a, Figure 2b, and Figure 2c. In Figure 1 sensor heads are immersed in liquid, sensor heads 321 and 322 may be shield with suitable materials. Shielding window may comprise a material that is transparent for the operating frequency. The liquid container 311 can be made of any materials.

59. By way of illustration, a contact-less sensor head configuration is shown in Figure 2a. The sensor heads 321 and 322 are placed outside the LUT container 312. LUT container may be built with suitable materials such that applied electromagnetic radiation can pass through the LUT container. Example of such materials are polytetrafluoroethylene (e.g. Teflon), plastic, glass, etc.

60. According to embodiments of the present invention, the sensor system may be used to measure the particle size and particle concentration inline, online, at line and in the lab. Inline means sensor heads are integrated in a suitable place of an industrial process such as wet miller/grinder, dispenser, emulsifier. This sensor configuration can give the real-time feedback to the industrial processes. The inline sensor doesn't require any sampling. It is also an advantage of embodiments according to the present invention that these sensor heads are easily customizable for inline measurements e.g. in pipes, tank etc. By way of illustration, a sensor head configuration for pipe is shown in Figure 2c. Sensor heads 321 and 322 are built inside the LUT container (e.g. pipe). The sensor heads 321 and 322 may be shielded with suitable materials.

61. According to embodiments of the present invention the sensor system may be used to measure the particle size and particle concentration online. It means sensor heads are integrated in a bypass of the industrial process. At line means the LUT is taken form the industrial production process and measured in the sensor system. Inline, online, at line and lab device system are known the expert of the field.

62. The sensor system and mathematical extraction model according to embodiments of the present invention measures and analyzes the transmission signal through the LUT. There are two unknowns (particle concentration and particle size) and two measured parameters (amplitude and phase). By developing a specific relationship among these parameters, two unknows may be determined. As mentioned above, amplitude of the signal is determined by the absorption and diffraction. While phase is determined by the speed of propagation in LUT. The effective permittivity of the LUT which determined by the concentration of the particles. This parameter determines partially the attenuation coefficient of the liquid together with the wavelength at which the EM wave propagates through the LUT. In short, the particle concentration influences the amplitude and the phase of the transmitted signal.

63. Generally, phase is determined by the speed of propagation of EM wave in the LUT. If the concentration changed, the speed of travel will also change. But if particle size changed, the wavelength at which the EM wave propagates through the liquid remains same. Hence, the measured phase is only a function of concentration. It's linearly dependent on the concentration of the particles.

$$Phase = K \cdot C \qquad\qquad (2)$$

with K as a constant and C as the concentration of particles.

64. By measuring the phase of a product with known concentration, K can be determined. This calibration needs to perform only once for a product. The constant K can be different for different products. By using the constant K concentration of particles may be measured.

65. The signal diffraction phenomenon takes place when the signal incident on the particles. Therefore, the signal amplitude that transmits through the liquid decreases with increasing particle size. However, different particle size does not affect the speed of the propagation. Therefore, the particle size only influences the amplitude of the signal.

66. As mentioned in above, amplitude is a function of both concentration and particle size. Hence,

$$Amplitude = total\ absorption + total\ diffraction$$

67. Total absorption is determined by the concentration. While total diffraction is function of both particle size and concentration.

Total absorption = Particles concentration,
Total diffraction = Average size of the particles + Particles concentration,

68. Following formulation is developed to explain this phenomenon

$$A = a \cdot C + b \cdot C \cdot log_{10}(s) \tag{3}$$

with $A$ as the measured amplitude in dB, $a$ as the constant which represent the effect of the concentration, $b$ as the constant which represent the effect of the concentration for a particle size, Cas the concentration of the particles and s as the size of the particle.

69. First part of equation (3) represents the total absorption and it is linearly dependent on the concentration of the particles. Second part of the equation (3) represents the total diffraction. Total diffraction is the function of the concentration and size of the particles. If the size of the particles is bigger, diffraction will increase, and total amplitude will decrease.

70. In equation (3), there are two unknow and two amplitude measurements are required to determine a and b. Same concentration with different sizes can be used for the calibration process. Once these unknows are determined, by using equations (2) and (3), particle size and concentration can be determined.

71. According to embodiments of the present invention, the amplitude and phase are measured at the same time, which gives the way to determine particle size at different concentrations.

72. According to embodiments of the present invention the sensor system is most suitable for the wet milling process monitoring. Wet-milling processes use mechanical energy to physically break down coarse particles to finer ones in a liquid media. Wet-milling processes are commonly used in pharmaceutical industries to breakdown the bigger particles into smaller. Status of the milling process can be determined by measuring the particle sizes. The amount of the particles i.e. concentration remains same and particle sizes always reduces with milling process. According to embodiments of the present invention, the sensor may be most suitable of wet milling process monitoring. It can provide the real-time feedback.

73. Since concentration is always constant, only the total diffraction determines the amplitude, equation (3) reduces to

$$A = a + b \cdot log_{10}(s) \tag{4}$$

With A as the measured amplitude in dB, b as the constant representing the effect of the size in amplitude and s as the average size of the particles.

74. In equation (4) 'b' is unknown and requires an amplitude measurement. Once this unknown has been determined, particle can be determined to give a real-time feedback to the wet-milling machine.

75. The sensor furthermore may comprise a computer program for the implementation of above-mentioned mathematical models and calibration data to determine the particle size and particle concentrations. In some embodiments, such a program may comprise or be replaced by a programmed algorithm or a look up table. Such a computer program may also communicate, control, read the data from the different hardware such as electromagnetic radiation source, electromagnetic radiation receiver. Such a program may also comprise the sub-program to give the feedback to the industrial process as means of controlling them based on the measure particle size and particle concentration. Such a computer program may be part of the sensor or may be external thereto. Other optional component such as for example a memory, processing means, an output means or display for indicating a result, ... may be present, as known by the person skilled in the art.

76. In addition, the sensor system may comprise the temperature measurement device. In general, the permittivity of the liquid media may be temperature dependent. Temperature change also change the transmitted signal through the liquid media. The temperature change can be compensated by recording temperature profile of the liquid media for the maximum possible operating temperature range. Look up table can be made to use afterwards to compensate the temperature change. Hence, in this invention a temperature probe may also be used to measure the temperature in predetermined temperature range and to nullify the effect of the temperature on the dielectric permittivity of liquid media. Such a temperature compensation may be a part of computer program.

77. Embodiments of the present invention may be advantageously readily applied in any industry, e.g. it may be compatible with water cleaning, industrial, pharmaceutical or (bio-) hazardous environmental conditions. In such cases, the emitting and receiving sensor heads may be fabricated and shielded with suitable materials. One example of fabrication material may be the stainless steel. Shielding window may comprise a material that is transparent for the considered waves. Example of shielding materials may be used are polytetrafluoroethylene (e.g. Teflon), plastic and glass, etc.

**Claims**

1. A sensor system for measuring the particle size and particle concentration in liquid under test, the sensor system comprising

   - an electromagnetic radiation input means for creating an electromagnetic radiation signal of a single or multiple frequency within a frequency range of 0.1 GHz to 1 THz,
   - an emission sensor head for directing electromagnetic radiation to the liquid under test,
   - a means to contain the liquid under test,
   - a receiver sensor head for receiving said electromagnetic radiation after transmitted through liquid under test,
   - a detection means for detecting a signal transmitted through the liquid under test,
   - a computer program unit for determining the particle size and particle concentration based on the received electromagnetic radiation and mathematical model or calibration data.

2. A sensor system according to claim 1, wherein the sensor is a sensor for sensing transmission signal which contains the amplitude and phase, wherein the detection means is configured for detecting a signal transmitted through the liquid under test.

3. A sensor system according claims 1 and 2, wherein the emission sensor head and the receiving sensor head are optically aligned with respect to each other such that the electromagnetic radiation is transmitter through the liquid under test.

4. A sensor system according to previous claims, wherein said particles are uniformly distributed within the liquid under test.

5. A sensor system according to any of the previous claims, wherein the length between two sensor heads is adjustable so that one can adjust the sensor to the liquid under test to be measured.

6. The sensor system according to claim 1, wherein the computer program unit is programmed for considering the temperature of the predetermined LUT for nullification of the effect of temperature in the extraction of particle size and particle concentration.

7. A sensor system according to any of the previous claims, wherein operating frequency of the sensor is optimized for a predetermined LUT based on

   - The particles present in the LUT whereby the wavelength of the operating frequency or the wavelength of the highest operating frequency is at least 20 times higher than the largest particles within the liquid under test
   - The penetration depth of the electromagnetic radiation within the said predetermined liquid media whereby the penetration depth is larger or equal to 3 mm.

8. A sensor according to any of the previous claims, wherein the sensor has a different sensor heads configuration

   - where sensor heads are immersed in LUT.
   - where sensor heads are placed outside of the LUT container made with the electromagnetically transparent material for the operating frequency of the sensor. This configuration is contact-less.

- where sensor heads are attached in interior of the LUT container. LUT and sensor head are in contact
- where sensor heads are built in interior of the LUT container, for example pipe, LUT is following in LUT container

9. The sensor heads according to claim 6, wherein the sensor heads are covered with protective window for liquid shielding.

10. A method for determining the particle size and the particle concentration of a LUT, the method comprising the steps of

- emitting electromagnetic radiation towards the predetermined LUT, the electromagnetic radiation having at least one frequency within a frequency range of 0.1 GHz to 1 THz
- detecting electromagnetic radiation transmitted through the LUT.
- Temperature compensation of amplitude and/or phase of the transmitted electromagnetic radiation signal
- Extracting the particle size from the compensated transmitted amplitude signal based on a mathematical model or calibration data
- Extracting the particle concentration from the compensated transmitted phase signal based on a mathematical model or calibration data

11. A computer program unit may program for receiving the transmitted data through the LUT, recording the temperature, store the calibration data. The computer program unit further being programmed for determining the particle size and concentration based on said received electromagnetic radiation and based on a mathematical model or calibration data. The computer program may further may programmed for controlling the industrial process e.g. wet milling/grinding, emulsification, dispersion etc.

12. Use of a sensor system according to the previous claims

- for monitoring the particle size in a liquid under test.
- for monitoring the concentration of the particle in a liquid under test.
- for monitoring a process, e.g. an industrial process, wet milling/grinding, emulsification, dispersion processes.

**Figure 1**

**Figure 2**

**Figure 3**

From emitter

To receiver

313
LUT
container

34
d

322
Sensor
head T

321
Sensor
head R

33
LUT

Direction of LUT
follow

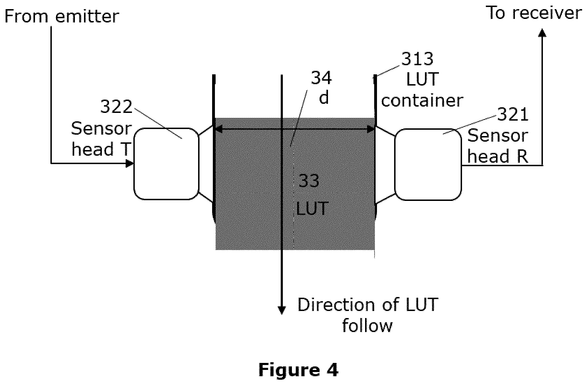

**Figure 4**

Europäisches
Patentamt
European
Patent Office
Office européen
des brevets

**EUROPEAN SEARCH REPORT**

Application Number

EP 19 02 0315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 754 055 A (MCADOO JOHN H [US] ET AL) 19 May 1998 (1998-05-19) | 1-4,6-12 | INV. G01N15/02 G01N21/3563 G01N21/3581 |
| Y | * column 1, line 6 - line 11 * <br> * column 2, line 56 - column 3, line 3 * <br> * column 3, line 38 - line 46 * <br> * column 4, line 56 - column 10, line 8 * <br> * figure 1 * <br> ----- | 5 | ADD. G01N21/3577 G01N21/47 |
| Y | US 2010/225916 A1 (NAKAHARA KOICHI [JP] ET AL) 9 September 2010 (2010-09-09) <br> * paragraphs [0071], [0079] * <br> * figure 1 * <br> ----- | 5 | |
| A | JP 5 073936 B2 (MEIJI MILK PROD CO LTD) 14 November 2012 (2012-11-14) <br> * the whole document * <br> ----- | 8 | |
| A | JP H07 325025 A (NISSHIN STEEL CO LTD) 12 December 1995 (1995-12-12) <br> * the whole document * <br> ----- | 1-12 | |

TECHNICAL FIELDS SEARCHED (IPC)

G01N

The present search report has been drawn up for all claims

| Place of search | Date of completion of the search | Examiner |
|---|---|---|
| Munich | 10 November 2020 | Witte, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 02 0315

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2020

| Patent document cited in search report | | Publication date | Patent family member(s) | | Publication date |
|---|---|---|---|---|---|
| US 5754055 | A | 19-05-1998 | NONE | | |
| US 2010225916 | A1 | 09-09-2010 | CN | 101688831 A | 31-03-2010 |
| | | | EP | 2124038 A1 | 25-11-2009 |
| | | | JP | 2012255806 A | 27-12-2012 |
| | | | JP | WO2008105146 A1 | 03-06-2010 |
| | | | US | 2010225916 A1 | 09-09-2010 |
| | | | WO | 2008105146 A1 | 04-09-2008 |
| JP 5073936 | B2 | 14-11-2012 | JP | 5073936 B2 | 14-11-2012 |
| | | | JP | 2007121034 A | 17-05-2007 |
| JP H07325025 | A | 12-12-1995 | NONE | | |

EPO FORM P0459

For more details about this annex : see Official Journal of the European Patent Office, No. 12/82